# EUROPÄISCHE PATENTSCHRIFT

(11) **EP 4 313 536 B1**
(45) Veröffentlichungstag und Bekanntmachung des Hinweises auf die Patenterteilung: **01.01.2025**
(21) Anmeldenummer: 22740754.1
(22) Anmeldetag: 29.06.2022
(51) Int. Cl.: B29C 45/17

(54) **SAEULENLOSE SCHLIESSEINHEIT FÜR EINE SPRITZGIESSVORRICHTUNG**
COLUMN-FREE CLOSING UNIT FOR AN INJECTION-MOULDING APPARATUS
UNITÉ DE FERMETURE SANS COLONNE POUR UN APPAREIL DE MOULAGE PAR INJECTION

(30) Priorität: 01.07.2021 AT 505462021
(43) Veröffentlichungstag der Anmeldung: 07.02.2024
(73) Patentinhaber: Woojin Plaimm Co.,Ltd., Boeun-gun, Chungcheongbuk-do 28913 (KR)
(72) Erfinder: SVOBODA, Georg, 2391 Kaltenleutgeben (AT)
(74) Vertreter: Twelmeier Mommer & Partner
(86) Internationale Anmeldenummer: PCT/AT2022/060226
(87) Internationale Veröffentlichungsnummer: WO 2023/272324

(56) Entgegenhaltungen:
- AT-B1- 514 382
- AT-U1- 5 443
- DE-A1- 10 121 306
- DE-A1- 102014 007 932
- DE-A1- 19 633 688
- DE-A1- 19 732 337
- FR-A1- 2 834 237
- "WENIGER VERSCHLEISS BEI SAEULENLOSEN MASCHINEN", KUNSTSTOFFE, CARL HANSER VERLAG, MUNCHEN, DE, vol. 87, no. 8, 1 August 1997 (1997-08-01), pages 978, XP000721674, ISSN: 0023-5563

## Beschreibung

Die vorliegende Erfindung betrifft eine Schließeinheit, insbesondere eine säulenlose Schließeinheit, für eine Spritzgießvorrichtung sowie die Anordnung einer erfindungsgemäßen Schließeinheit mit einer Spritzgießvorrichtung.

Schließeinheiten oder Schließvorrichtungen werden bekannterweise beim Spritzgießen zur Halterung des Spritzgießwerkzeugs verwendet. Wichtige Funktionen, die von einer Schließeinheit übernommen werden sind somit unter anderem das Schließen der Formhälften sowie das Einstellen der Schließkraft vor dem Einspritzen des Gussmaterials, das Zuhalten der Formhälften während des Einspritzens und das Öffnen der Formhälften nach Beendigung des Einspritzens.

Zu diesem Zweck sind an bekannten Schließeinheiten üblicherweise zumindest zwei einander gegenüberliegende Formaufspannplatten und ein Schließ- bzw. Zuhaltemechanismus vorgesehen, wobei diese Komponenten an einem Rahmen gehalten werden. Die Formaufspannplatten sind dazu eingerichtet, die Formhälften zu tragen.

Hinsichtlich der Bauweise des Rahmens sind im Stand der Technik zwei grundlegend verschiedene Arten von Schließeinheiten bekannt. Einerseits können Schließeinheiten mit Säulen ausgebildet sein, bei welchen die Formaufspannplatten von einer Säulenkonstruktion gehalten werden. Andererseits können Schließeinheiten säulenlos ausgebildet sein. Ein derartiger Aufbau wird auch als holmlose Schließeinheit beschrieben, wobei die Formaufspannplatten bei der letztgenannten Art an einem meist C- oder H-förmigen Rahmen gehalten werden, der einseitig, z.B. nach oben, offen ist.

Ein wesentlicher Vorteil derartiger säulenloser Schließeinheiten besteht darin, dass sie einen einfachen Zugang zum Arbeitsbereich des Werkzeugs ermöglichen. Ein bei der Konstruktion zu beachtender Aspekt ist jedoch, dass durch die verwendete Rahmenbauweise spezielle Maßnahmen zur Erhaltung der Planparallelität der Formaufspannplatten beim Spritzgussvorgang getroffen werden müssen. Die Erhaltung der Planparallelität ist unter anderem wichtig, um Formteilte von hoher Qualität herzustellen.

Bei den ersten am Markt verfügbaren säulenlosen Schließeinheiten wurde versucht den Maschinenrahmen so steif wie möglich zu halten, um ein Aufbiegen des Rahmens zu verhindern und dadurch die Planparallelität der Formaufspannplatten beizubehalten. Dies führte jedoch zu Schließeinheiten mit vergleichsweise hohem Gewicht und großem Materialbedarf bei der Herstellung.

Später wurde erkannt, dass eine gewisse Verformung zulässig ist, die aber kompensiert werden kann bzw. muss, um die erwünschten Ergebnisse zu erhalten.

Im Stand der Technik werden hierfür unterschiedliche Lösungen vorgeschlagen, beispielsweise die gelenkige Lagerung einer Formaufspannplatte oder der Einsatz von flexiblen Halterungen für eine Formaufspannplatte, wie auch die aktive Kompensation des Pressdrucks durch Kompensationseinrichtungen.

Eine gattungsgemäße Schließeinheit, bei der die feststehende Formaufspannplatte über eine Abstützeinrichtung gegen den Maschinenrahmen abgestützt ist, ist aus der AT 514 382 B1 bekannt. Die dort beschriebene Abstützeinrichtung ist derart ausgeführt, dass sie wenigstens einen in Maschinenlängsrichtung verlaufenden Druckstab und wenigstens einen quer zur Maschinenlängsrichtung verlaufenden Biegebalken umfasst, wobei letzterer mit dem Maschinenrahmen verbunden ist. Die Press- bzw. Zuhaltekraft wird teilweise an den Druckstab und den Biegebalken übertragen, was zu einer Stauchung des Druckstabs und/oder einer Verbiegung des Biegebalkens führt. Bei entsprechender Auslegung der beiden vorgenannten Elemente kann die Planparallelität der Formaufspannplatten beim Einspritzvorgang, d.h. insbesondere während der Zuhaltung, weitestgehend aufrechterhalten werden.

Nachteilig an der in der AT 514 382 B1 vorgeschlagenen Lösung ist jedoch, dass mit einem einzigen Druckstab und einem einzigen Biegebalken keine völlig zufriedenstellende Abstimmung der Durchbiegung erreicht werden kann. Zur Verbesserung können mehrere seriell angeordnete Teile des Abstützelements vorgesehen sein, was in der AT 514 382 B1 ebenfalls vorgeschlagen wird. Diese Maßnahme bedeutet jedoch wiederum einen großen Konstruktions- und Kostenaufwand sowie einen hohen Platzbedarf. Zudem steht durch den Verlauf des Druckstabs in Richtung der Maschinenlängsachse nur ein begrenzter Freiraum am hinteren Ende der feststehenden Formaufspannplatte zur Verfügung. Es wäre jedoch wünschenswert, an dieser Stelle über mehr Platz für die Manipulation der Einspritzdüse zu verfügen.

Die Aufgabe der vorliegenden Erfindung kann somit darin gesehen werden, die Nachteile der AT 514 382 B1 zu überwinden und eine Schließeinheit für eine Spritzgießvorrichtung zu schaffen, die eine bessere Abstimmung der Durchbiegung der Abstützeinrichtung bei gleichzeitiger Reduktion des Material- und Konstruktionsaufwands und des Gesamtgewichts der Schließeinheit erlaubt.

Bevorzugt betrifft die vorliegende Erfindung somit eine säulen- oder holmlose Schließeinheit für eine Spritzgießvorrichtung, wobei die Schließeinheit einen Maschinenrahmen aufweist, der einen ersten Flügel und einen zweiten Flügel umfasst. Bevorzugt ist am ersten Flügel eine feststehende Formaufspannplatte angeordnet, wobei die feststehende Formaufspannplatte an einem Befestigungsbereich fest mit dem ersten Flügel verbunden ist. Der Begriff "fest" bedeutet in diesem Zusammenhang insbesondere, dass keine bewegliche Lagerung vorliegt, beispielsweise über Gelenke oder dergleichen. Ein Beispiel für eine feste Verbindung ist eine Verschraubung.

Die feststehende Formaufspannplatte ist insbesondere die jene Formaufspannplatte, durch die die Düse einer Spritzgussvorrichtung geführt wird und kann daher auch als Düsenplatte bezeichnet werden. Bevorzugt ist vorgesehen, dass am zweiten Flügel eine Schließeinrichtung angreift, die mit einer beweglichen Formaufspannplatte verbunden ist, wobei die Schließeinrichtung dazu eingerichtet ist, die bewegliche Formaufspannplatte in einer Maschinenlängsachse zu verfahren und eine Press- bzw. Zuhaltekraft in Richtung der feststehenden Formaufspannplatte auszuüben. Beim Zuhalten tritt eine Verformung des Maschinenrahmens auf, wobei sich insbesondere die freien Enden der beiden Flügel aufspreizen und/oder auseinanderbiegen.

Bevorzugt ist die feststehende Formaufspannplatte unterhalb des Befestigungsbereichs über eine Abstützeinrichtung elastisch gegen den Maschinenrahmen abgestützt, wobei die Abstützeinrichtung einen im Wesentlichen orthogonal zur Maschinenlängsachse verlaufenden Verbindungsbalken umfasst.

Die Aufgabe der Erfindung wird durch eine Schließeinheit mit den Merkmalen des unabhängigen Patentanspruchs gelöst.

Bevorzugt ist vorgesehen, dass die Abstützeinrichtung wenigstens einen bei Aufbringen der Presskraft auf Biegung beanspruchten Federbalken umfasst.

Bevorzugt ist vorgesehen, wobei der Federbalken zur Übertragung der Presskraft von der feststehenden Formaufspannplatte auf den Verbindungsbalken eingerichtet ist.

Bevorzugt ist vorgesehen, dass der Federbalken im Wesentlichen orthogonal zur Maschinenlängsachse sowie im Wesentlichen orthogonal zum Verbindungsbalken verläuft.

Durch diese Anordnung kann die Presskraft im Wesentlichen orthogonal, somit quer, zu seiner Längserstreckungsrichtung in den Federbalken eingeleitet werden. Dadurch unterscheidet sich der Federbalken wesentlich vom Druckstab der AT 514 382 B1, in welchen die Presskraft in Längsrichtung eingeleitet wird. Ein derartiger Druckstab ist in der vorliegenden Erfindung nicht vorgesehen, da die Abstützeinrichtung bevorzugt über kein Element verfügt, in das eine Krafteinleitung in Maschinenlängsachse erfolgt.

Überraschenderweise wird durch diese oben beschriebene bevorzugte Anordnung ermöglicht, dass die gesamte Kompensation der Durchbiegung durch den Federbalken erfolgt. Die Auslegung des Federbalkens kann in Anpassung an die Zuhaltekraft, die genaue Rahmengeometrie, etc. leicht erfolgen. Zudem kann für eine ausreichende Einstellbarkeit der Durchbiegung ein einziger Federbalken verwendet werden und eine serielle Schaltung mehrerer Elemente, die die Zuhaltekraft aufnehmen, ist im Gegensatz zur AT 514 382 B1 nicht erforderlich.

Insbesondere ist der Federverlauf des Federbalkens im Arbeitsbereich der Schließeinheit, d.h. beispielsweise zwischen 100 und 10.000 kN, gegebenenfalls zwischen 200 und 6.000 kN, linear. Anders ausgedrückt ist insbesondere die Federhärte des Federbalkens im Arbeitsbereich der Schließeinheit konstant. Dadurch wird eine besonders einfache Auslegung des Federbalkens ohne empirische Versuche ermöglicht.

Bevorzugt dient der Verbindungsbalken lediglich zur Abstützung des Federbalkens gegen den Maschinenrahmen und er trägt im Wesentlichen nicht zur Kompensation der Durchbiegung bei. In diesem Zusammenhang sei angemerkt, dass sich der Verbindungsbalken bei Aufbringen der Zuhaltekraft üblicherweise in geringem Maße verbiegt, wobei diese Verformung jedoch nicht maßgeblich bei der Kompensation der Aufweitung des Rahmens mitwirkt. So kann sich der Verbindungsbalken beispielsweise um höchstens 100 µm, bevorzugt um höchstens 75 µm, verbiegen.

Gegebenenfalls umfasst der Maschinenrahmen zumindest zwei Rahmenteile. Die Rahmenteile können getrennte Bauteile sein, die durch Verbindungsmittel zusammengehalten werden, um den Maschinenrahmen zu bilden. Die Rahmenteile können jedoch auch ein gemeinsames, insbesondere einstückig geformtes Bauteil, bilden. Gegebenenfalls umfasst der Befestigungsbereich bei Vorhandensein von zwei Rahmenteilen zumindest zwei voneinander beabstandete und auf unterschiedlichen Rahmenteilen angeordnete Befestigungsflächen.

In einer weiter bevorzugten Ausführung ist vorgesehen, dass die erfindungsgemäße Konstruktion zwei nebeneinander angeordnete Federbalken umfasst. "Nebeneinander" bedeutet in diesem Zusammenhang insbesondere, dass beide Federbalken entlang der Längserstreckungsrichtung eines Verbindungsbalkens angeordnet sind. Anders ausgedrückt kann "nebeneinander" bezeichnen, dass die Zuhaltekraft parallel, somit nicht seriell, in die Federbalken eingeleitet wird.

Die Ausführung mit zwei nebeneinander angeordneten Federbalken erlaubt weitere Verbesserungen im Vergleich zum Stand der Technik, wobei insbesondere die Plattenparallelität der Formaufspannplatten noch besser einstellbar ist und die Abstützeinrichtung eine bessere Toleranz gegen asymmetrische Krafteinleitung aufweist, welche beispielsweise durch außermittigen Forminnendruck auftreten kann.

Werden in der vorliegenden Beschreibung die Merkmale eines Federbalken beschrieben, bezeichnet dies, sofern nicht explizit angegeben, die Merkmale eines, mehrerer oder aller Federbalken der erfindungsgemäßen Schließeinheit. Die verwendete Formulierung im Singular wird zur vereinfachten Lesbarkeit verwendet.

Der Federbalken kann als separates Bauteil ausgebildet sein, das zwischen der feststehenden Formaufspannplatte und dem Verbindungsbalken derart angeordnet ist, dass die Übertragung der Zuhaltekraft auf den Maschinenrahmen ermöglicht wird. Der Federbalken kann jedoch auch integral mit der feststehenden Formaufspannplatte ausgebildet sein, beispielsweise als an der feststehenden Formaufspannplatte vorgesehener Fortsatz.

In einer Ausführungsform kann ein Verbindungsbalken vorgesehen sein, an dem sich ein oder mehrere Federbalken abstützen, wobei der eine Verbindungsbalken zwei Rahmenteile bzw. Rahmenseiten miteinander verbindet. In diesem Fall kann der Verbindungsbalken zur Abstützung am Rahmen in Aussparungen oder Öffnungen eingeführt sein, es können aber auch andere Arten der Verbindung mit dem Rahmen gewählt werden, beispielsweise die Abstützung des Verbindungsbalkens an Nasen oder Fortsätzen der Rahmenteile oder eine direkte Verschraubung des Verbindungsbalkens mit dem Rahmen.

In einer alternativen Ausführungsform kann an jedem der zumindest zwei Rahmenteile ein separater Verbindungsbalken angeordnet sein. In diesem Fall verbinden die Verbindungsbalken die beiden Rahmenteile nicht. Die Verbindungsbalken können beispielsweise als Nasen oder Fortsätze ausgeführt sein, die integral mit den Rahmenteilen ausgeführt sind, wobei alternative Befestigungen möglich sind. In dieser Ausführungsform ist bevorzugt, dass pro Verbindungsbalken ein Federbalken vorgesehen und an diesem Verbindungsbalken angeordnet ist.

Gegebenenfalls ist vorgesehen, dass der Befestigungsbereich, an dem die feststehende Formaufspannplatte fest mit dem Maschinenrahmen verbunden ist, über dem Abstützbereich angeordnet ist, an dem der Federbalken mit der feststehenden Formaufspannplatte verbunden ist. Gegebenenfalls liegt der Befestigungsbereich in der oberen Hälfte der feststehenden Formaufspannplatte. Der Befestigungsbereich kann auch in der Mitte der feststehenden Formaufspannplatte liegen. Gegebenenfalls liegt der Abstützbereich in der unteren Hälfte, vorzugsweise im unteren Drittel der feststehenden Formaufspannplatte.

Gegebenenfalls ist vorgesehen, dass der Verbindungsbalken unterhalb des Abstützbereichs liegt, und/oder dass der Federbalken ausgehend vom Abstützbereich nach unten verläuft. Insbesondere kann der Federbalken ausgehend vom Abstützbereich vom freien Ende des ersten Flügels wegweisen. Diese Ausführung ermöglicht eine besonders gute Zugänglichkeit der in der feststehenden Formaufspannplatte vorgesehenen Düsenöffnung. Dies gilt auch, wenn der Federbalken integral mit der feststehenden Formaufspannplatte ausgebildet ist und der Federbalken vom freien Ende des ersten Flügels wegweist.

Wenn mehrere Federbalken vorgesehen sind, die entlang der Längserstreckungsrichtung eines Verbindungsbalkens nebeneinander angeordnet sind, ist insbesondere vorgesehen, dass die Federbalken im Wesentlichen parallel zueinander verlaufen.

Um etwaige Fertigungs- und/oder Montagetoleranzen ausgleichen zu können und die Parallelität der beiden Formaufspannplatten vor Beaufschlagung mit der Zuhaltekraft individuell anpassen zu können, kann die Schließeinheit eine Einstellvorrichtung umfassen. Allgemein kann diese Einstellvorrichtung ermöglichen, die Neigung der feststehenden Formaufspannplatte anzupassen. Dies kann durch unterschiedliche Mittel erreicht werden, beispielsweise durch ein Einstellmittel, wie eine Einstellschraube, und/oder eine gewinkelte Anlagefläche.

Der Maschinenrahmen kann in bekannter Weise C-förmig oder H-förmig ausgeführt sein. Wenn der Maschinenrahmen H-förmig ausgeführt ist, weist dieser zusätzlich einen dritten und einen vierten Flügel auf, die dem ersten und zweiten Flügel gegenüberliegen. Um eine verbesserte Kompensation der Rahmenverformung zu erreichen, kann zwischen dem dritten und vierten Flügel eine Kompensationseinrichtung angeordnet sein, die einen von der Zuhaltekraft abhängigen Kompensationsdruck auf dritten und vierten Flügel aufbringt.

Die Kompensationseinrichtung kann beispielsweise ein Kompensationszylinder sein. Die Kompensationseinrichtung kann mit der Schließeinrichtung in Wirkverbindung stehen, beispielsweise über eine hydraulische Verbindung.

Die Schließeinrichtung kann eine formschlüssige und/oder eine kraftschlüssige Verriegelung ermöglichen. Beispiele für Schließeinrichtungen mit formschlüssiger Verriegelung sind die mechanische Zuhaltung oder die hydraulische Zuhaltung. Beispiele für eine kraftschlüssige Verriegelung sind die mechanisch-hydraulische Zuhaltung oder die elektromechanische Zuhaltung. Ein besonderes Beispiel für die mechanische Zuhaltung ist das Kniehebel-System.

Bevorzugt betrifft die vorliegende Erfindung eine säulenlose Schließeinheit für eine Spritzgießvorrichtung, wobei die Schließeinheit einen, gegebenenfalls zwei Rahmenteile umfassenden, Maschinenrahmen aufweist, wobei der Maschinenrahmen einen ersten Flügel und einen zweiten Flügel umfasst, wobei eine feststehende Formaufspannplatte vorgesehen ist, die am ersten Flügel angeordnet ist, wobei die feststehende Formaufspannplatte an einem Befestigungsbereich fest mit dem ersten Flügel verbunden ist, wobei eine Schließeinrichtung vorgesehen ist, die am zweiten Flügel angreift und die mit einer beweglichen Formaufspannplatte verbunden ist, wobei die Schließeinrichtung dazu eingerichtet ist, die bewegliche Formaufspannplatte entlang einer Maschinenlängsachse zu verfahren und eine Presskraft in Richtung der feststehenden Formaufspannplatte auszuüben, wobei die feststehende Formaufspannplatte unterhalb des Befestigungsbereichs über eine Abstützeinrichtung elastisch gegen den Maschinenrahmen abgestützt ist, wobei die Abstützeinrichtung einen im Wesentlichen orthogonal zur Maschinenlängsachse verlaufenden Verbindungsbalken umfasst.

Bevorzugt ist vorgesehen, dass die Abstützeinrichtung wenigstens einen bei Aufbringen der Presskraft auf Biegung beanspruchten Federbalken umfasst, wobei der Federbalken zur Übertragung der Presskraft von der feststehenden Formaufspannplatte auf den Verbindungsbalken eingerichtet ist, und dass der Federbalken im Wesentlichen orthogonal zur Maschinenlängsachse sowie im Wesentlichen orthogonal zum Verbindungsbalken verläuft.

Gegebenenfalls ist vorgesehen, dass ein Verbindungsbalken die beiden Rahmenteile miteinander verbindet, oder dass zwei separate Verbindungsbalken vorgesehen sind, die jeweils an einem Rahmenteil angeordnet sind.

Gegebenenfalls ist vorgesehen, dass die Abstützeinrichtung mehrere, insbesondere zwei, Federbalken umfasst, wobei die Federbalken in Längserstreckungsrichtung eines Verbindungsbalkens nebeneinander angeordnet sind.

Gegebenenfalls ist vorgesehen, dass an jedem Verbindungsbalken ein Federbalken angeordnet ist, wenn zwei separate Verbindungsbalken vorgesehen sind.

Gegebenenfalls ist vorgesehen, dass der/die Federbalken an einem Abstützbereich mit der feststehenden Formaufspannplatte verbunden ist/sind, wobei der Abstützbereich in der unteren Hälfte, vorzugsweise im unteren Drittel, der feststehenden Formaufspannplatte angeordnet ist, und wobei der Befestigungsbereich vorzugsweise in der oberen Hälfte der feststehenden Formaufspannplatte angeordnet ist Gegebenenfalls ist vorgesehen, dass der/die Federbalken integral mit der feststehenden Formaufspannplatte gebildet ist/sind.

Gegebenenfalls ist vorgesehen, dass der Abstützbereich bezogen auf die Maschinenlängsachse über dem entsprechenden Verbindungsbalken angeordnet ist.

Gegebenenfalls ist vorgesehen, dass die Federbalken zueinander im Wesentlichen parallel verlaufen, wenn mehrere Federbalken vorgesehen sind.

Gegebenenfalls ist vorgesehen, dass eine Einstellvorrichtung vorgesehen ist, die dazu eingerichtet ist, die Neigung der feststehenden Formaufspannplatte anzupassen.

Gegebenenfalls ist vorgesehen, dass die Einstellvorrichtung eine gewinkelte Anlagefläche umfasst, wobei die gewinkelte Anlagefläche an einer oder mehreren der folgenden Komponenten angeordnet ist:
- an der feststehenden Formaufspannplatte im Verbindungsbereich zum Federbalken, wobei die gewinkelte Anlagefläche insbesondere am Abstützbereich angeordnet ist,
- am Federbalken im Verbindungsbereich zur feststehenden Formaufspannplatte,
- am Federbalken im Verbindungsbereich zum Verbindungsbalken,
- am Verbindungsbalken im Verbindungsbereich zum Federbalken,
wobei die gewinkelte Anlagefläche zur Längserstreckungsrichtung des Federbalkens einen Neigungswinkel α von größer als 0° aufweist, wobei gegebenenfalls pro Federbalken zumindest eine gewinkelte Anlagefläche vorgesehen ist.

Gegebenenfalls ist vorgesehen, dass die Einstellvorrichtung ein Keilelement umfasst.

Gegebenenfalls ist vorgesehen, dass die Einstellvorrichtung eine Einstellschraube umfasst, wobei gegebenenfalls an jedem Federbalken eine Einstellschraube vorgesehen ist.

Gegebenenfalls ist vorgesehen, dass der/die Federbalken mit der feststehenden Formaufspannplatte verschraubt ist/sind, und/oder dass der/die Federbalken mit dem Verbindungsbalken verschraubt ist/sind.

Gegebenenfalls ist vorgesehen, dass der/die Federbalken gegen die feststehende Formaufspannplatte vorgespannt ist/sind.

Gegebenenfalls ist vorgesehen, dass der/die Verbindungsbalken in Ausnehmungen der Rahmenteile eingeführt ist/sind, oder dass der/die Verbindungsbalken einstückig mit wenigstens einem Rahmenteil ausgeführt ist/sind.

Gegebenenfalls ist vorgesehen, dass der Maschinenrahmen eine im Wesentlichen C-förmige Rahmengeometrie aufweist.

Gegebenenfalls ist vorgesehen, dass der Maschinenrahmen eine im Wesentlichen H-förmige Rahmengeometrie aufweist, wobei der Maschinenrahmen zusätzlich einen dritten Flügel und einen vierten Flügel umfasst, wobei zwischen drittem Flügel und viertem Flügeleine Kompensationseinrichtung angeordnet ist.

Gegebenenfalls ist vorgesehen, dass die Kompensationseinrichtung mit der Schließeinrichtung in Wirkverbindung steht.

Gegebenenfalls ist vorgesehen, dass die Schließeinrichtung einen elektrischen, hydraulischen und/oder mechanischen Schließmechanismus umfasst.

Bevorzugt betrifft die Erfindung ferner eine Anordnung einer Spritzgießvorrichtung mit einer wie oben beschriebenen Schließeinheit, wobei eine Spritzdüse der Spritzgießvorrichtung an der feststehenden Formaufspannplatte angeordnet ist.

Die Längserstreckungsrichtung eines Bauteils oder eines Elements soll im Sinne der vorliegenden Erfindung insbesondere die größte räumliche Ausdehnung dieses Bauteils oder Elements bezeichnen. In einem allgemeinen Beispiel ist somit die die Längserstreckungsrichtung eines quaderförmigen Balkens mit den Abmessungen X=50 cm, Y=10cm, Z=10cm die X-Richtung.

Wenn relative Begriffe, wie etwa "oben", "unten", "über" oder "unter", verwendet werden, bezieht sich dies im Rahmen der vorliegenden Erfindung insbesondere auf die Position in bestimmungsgemäßer Ausrichtung der Schließeinheit bzw. der Ausrichtung in ihrer Betriebsstellung. Beispielsweise weisen in der Betriebsstellung der erste und der zweite Flügel nach oben.

Weitere Merkmale der vorliegenden Erfindung ergeben sich aus den Patentansprüchen, den Figuren und der Beschreibung der Ausführungsbeispiele.

Nachfolgend wird die Erfindung anhand von exemplarischen, nicht einschränkenden Ausführungsbeispielen im Detail erläutert.

Es zeigen:
Fig. 1 eine schematische perspektivische Ansicht einer Schließeinheit gemäß einem ersten erfindungsgemäßen Ausführungsbeispiel;
Fig. 2 eine schematische Schnittansicht der Schließeinheit aus Fig. 1;
Fig. 3 eine weitere schematische Schnittansicht der Schließeinheit aus Fig. 1;
Fig. 4 zeigt eine schematische Schnittansicht der Schließeinheit aus Fig. 1 im Detail;
Fig. 5 eine schematische perspektivische Ansicht einer Schließeinheit gemäß einem zweiten erfindungsgemäßen Ausführungsbeispiel;
Fig. 6 eine schematische perspektivische Ansicht einer Schließeinheit gemäß einem dritten erfindungsgemäßen Ausführungsbeispiel;
Fig. 7 eine schematische Schnittansicht der Schließeinheit aus Fig. 6.

Soweit nicht anders angegeben, sind in den Figuren die folgenden Elemente gezeigt: Maschinenrahmen 1, Rahmenteil 2, erster Flügel 3, zweiter Flügel 4, feststehende Formaufspannplatte 5, Schließeinrichtung 6, bewegliche Formaufspannplatte 7, Maschinenlängsachse 8, Befestigungsbereich 9, Verbindungsbalken 10, Federbalken 11, erster Abstützbereich 12, gewinkelte Anlagefläche 13, dritter Flügel 14, vierter Flügel 15, zweiter Abstützbereich 16, Kompensationseinrichtung 17, Düsenöffnung 18, Führungseinrichtung 19, Befestigungsfläche 20, Verschraubung 21, Einstellschraube 22.

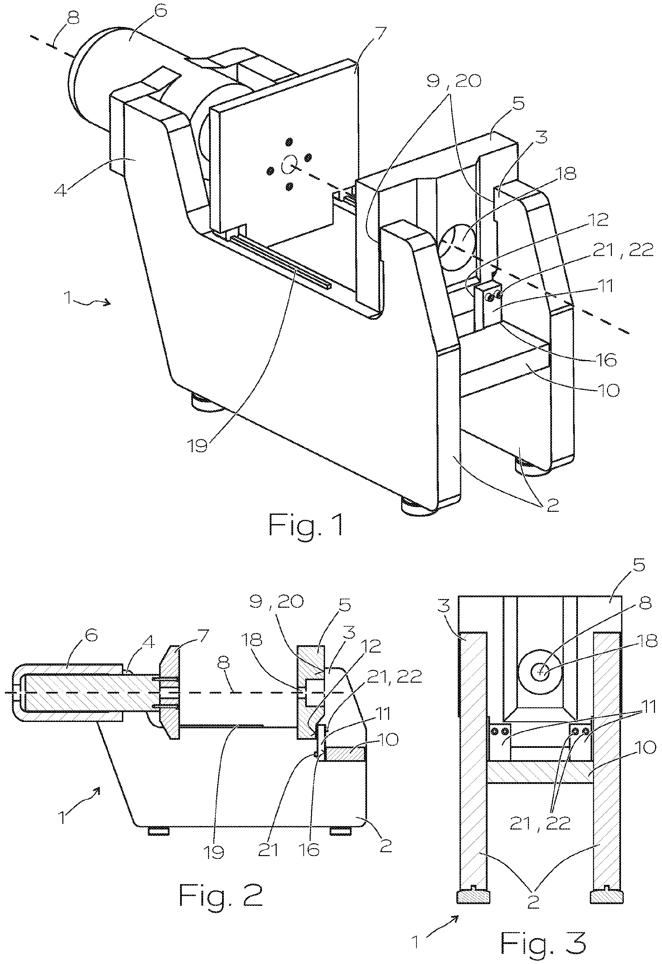

Fig. 1 zeigt eine schematische perspektivische Ansicht einer Schließeinheit gemäß einem ersten erfindungsgemäßen Ausführungsbeispiel. Die Schließeinheit in Fig. 1 umfasst einen Maschinenrahmen 1, der zwei Rahmenteile 2 umfasst. Der Maschinenrahmen 1 ist in diesem Ausführungsbeispiel C-förmig ausgebildet und umfasst einen ersten Flügel 3 sowie einen zweiten Flügel 4.

Am ersten Flügel 3 ist eine feststehende Formaufspannplatte 5 angeordnet, die eine Düsenöffnung 18 zur Durchführung der Düse einer Spritzgussvorrichtung umfasst. Die feststehende Formaufspannplatte 5 kann daher auch als Düsenplatte bezeichnet werden.

Am zweiten Flügel 4 ist eine Schließeinrichtung 6 angeordnet, die eine bewegliche Formaufspannplatte 7 trägt. Die Schließeinrichtung 6 ist zur Aufwendung einer Presskraft in Richtung der Maschinenlängsachse 8 eingerichtet. In diesem Ausführungsbeispiel ist die Schließeinrichtung 6 eine hydraulische Schließeinrichtung 6. Die bewegliche Formaufspannplatte 7 ist in bekannter Weise im Bereich ihrer Unterseite über eine Führungseinrichtung 19 am Maschinenrahmen 1 geführt.

Die feststehende Formaufspannplatte 5 ist an einem Befestigungsbereich 9, der in Form von zwei gegenüberliegenden und an jeweils einem Rahmenteil 2 liegenden Befestigungsflächen 20 ausgeführt ist, fest mit dem Maschinenrahmen verbunden. In diesem Ausführungsbeispiel ist die Verbindung am Befestigungsbereich 9 durch Verschraubungen (nicht gezeigt) realisiert. Der Befestigungsbereich 9 liegt in der oberen Hälfte der feststehenden Formaufspannplatte 5.

Im unteren Teil der feststehenden Formaufspannplatte 5 ist diese über eine Abstützeinrichtung gegen den Maschinenrahmen 1 abgestützt, wobei die Abstützeinrichtung einen Verbindungsbalken 10 sowie zwei nebeneinander angeordnete Federbalken 11 umfasst.

Der Verbindungsbalken 10 verbindet die beiden Rahmenteile 2 miteinander und ist mit dem Maschinenrahmen 1 verschraubt (nicht gezeigt). Der Verbindungsbalken 10 verläuft im Wesentlichen orthogonal zur Maschinenlängsachse 8. Zur Weiterleitung der Presskraft vom unteren Teil der feststehenden Formaufspannplatte 5 auf den Verbindungsbalken 10 und damit weiter zum Maschinenrahmen 1 sind zwischen der feststehenden Formaufspannplatte 5 und dem Verbindungsbalken 10 zwei Federbalken 11 vorgesehen, die einerseits über einen Abstützbereich 12 mit der feststehenden Formaufspannplatte 5 und andererseits über einen zweiten Abstützbereich 16 mit dem Verbindungsbalken 10 verbunden sind. Die beiden Federbalken 11 verlaufen im Wesentlichen orthogonal zur Maschinenlängsachse 8 sowie im Wesentlichen orthogonal zum Verbindungsbalken 10.

Die Federbalken 11 sind am ersten Abstützbereich 12 sowie am zweiten Abstützbereich 16 über Verschraubungen 21 mit den jeweiligen weiteren Bauteilen verbunden. Die Federbalken 11 sind derart ausgeführt, dass ihre Federhärte im Bereich zwischen 500 und 5.000 kN konstant ist.

Fig. 2 zeigt eine schematische Schnittansicht der Schließeinheit aus Fig. 1 entlang einer Ebene, die parallel zur Maschinenlängsachse 8 verläuft. Fig. 2 verdeutlicht den Verlauf der Federbalken 11 ausgehend vom ersten Abstützbereich 12 nach unten, d.h. vom Ende des ersten Flügels 3 wegweisend.

Fig. 3 zeigt eine schematische Schnittansicht der Schließeinheit aus Fig. 1 entlang einer Ebene, die quer zur Maschinenlängsachse 8 verläuft. Hier sind beide Federbalken 11 erkennbar, die im Wesentlichen parallel zueinander verlaufen und nebeneinander am Verbindungsbalken 10 angeordnet sind.

Die Funktionsweise der Schließeinheit gemäß dem oben beschriebenen ersten Ausführungsbeispiel ist wie folgt: Zur Herstellung eines Gussteils werden entsprechende Formhälften (nicht gezeigt) an den Formaufspannplatten 5, 7 angeordnet. Mithilfe der Schließeinrichtung 6 werden die Form- oder Werkzeughälften aneinander gepresst und über eine im Bereich der feststehenden Formaufspannplatte 5 angeordnete Spritzgussvorrichtung (nicht gezeigt) wird das Gussmaterial in das Werkzeug eingespritzt. Das Einspritzen des Gussmaterials bewirkt eine Auftreibkraft, die der Zuhaltekraft der Schließeinheit entgegenwirkt. Diese einander entgegenwirkenden Kräfte würden dazu führen, dass sich die Flügel 3, 4 aufspreizen, was wiederum bedingt, dass die Formaufspannplatten 5, 7 nicht mehr parallel zueinander angeordnet sind. Diesem Phänomen soll die Abstützeinrichtung entgegenwirken. Die Federbalken 11 biegen sich durch und kompensieren dadurch die Verformung der Flügel 3, 4 nach außen. Da die Federhärte der Federbalken 11 der über den Betriebsbereich der Zuhaltekraft konstant ist, ist eine rechnerische Auslegung mit bekannten Mitteln möglich. Die Parallelität der Formaufspannplatten 5, 7 kann dadurch im gewählten Betriebsbereich aufrechterhalten werden.

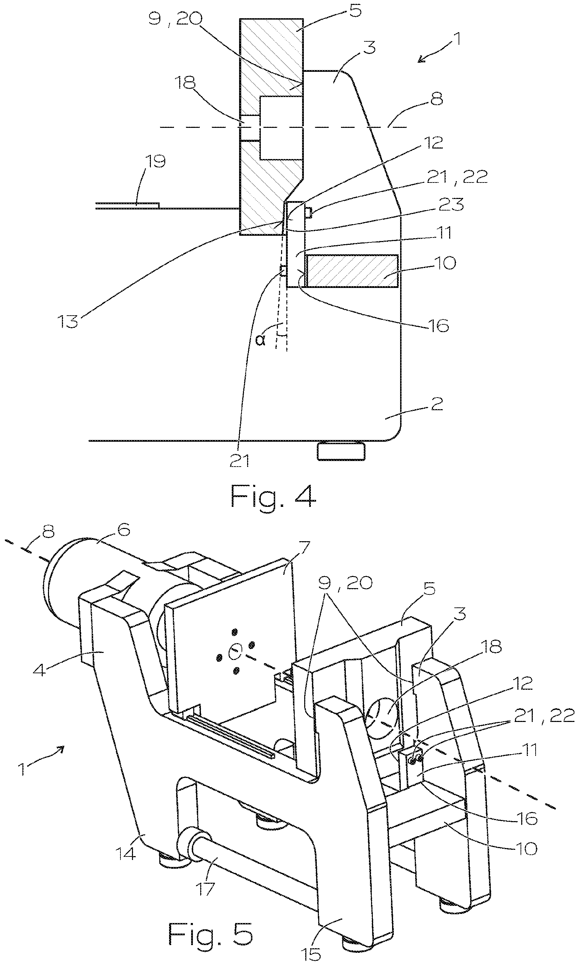

Fig. 4 zeigt eine schematische Schnittansicht der Schließeinheit aus Fig. 1, ähnlich Fig. 2, wobei in Fig. 4 der Bereich der Abstützeinheit und der feststehenden Formaufspannplatte 5 im Detail dargestellt ist.

In diesem Bereich befindet sich auch die Einstellvorrichtung, die in diesem Beispiel eine gewinkelte Anlagefläche 13 an der feststehenden Formaufspannplatte 5 am ersten Abstützbereich 12, ein zwischen der gewinkelten Anlagefläche 13 und dem Federbalken 11 angeordnetes Keilelement 23 sowie eine Einstellschraube 22 umfasst. Der Winkel α der gewinkelten Anlagefläche 13 im Vergleich zur Längserstreckungsrichtung der Federbalkens 11 beträgt in diesem Beispiel etwa 4°.

Durch die Einstellvorrichtung kann die Neigung der feststehenden Formaufspannplatte 5 vor Anlegen der Zuhaltekraft eingestellt werden. Dies erlaubt einen Ausgleich von Toleranzen durch Fertigung, Montage oder dergleichen, die zu einer möglichen Schrägstellung führen könnten. In alternativen nicht gezeigten Ausführungsformen kann die gewinkelte Anlagefläche 13 zusätzlich oder alternativ am Federbalken 11 und/oder am Verbindungsbalken 10 vorgesehen sein, wodurch sich ein vergleichbarer Effekt erzielen lässt.

Fig. 5 zeigt eine schematische perspektivische Ansicht einer Schließeinheit gemäß einem zweiten erfindungsgemäßen Ausführungsbeispiel. Im Unterschied zum ersten Ausführungsbeispiel ist die Schließeinheit hier nicht mit einem C-förmigen Rahmen, sondern mit einem H-förmigen Rahmen ausgeführt. Der Maschinenrahmen 1 umfasst daher neben dem ersten Flügel 3 und dem zweiten Flügel 4 noch einen dritten Flügel 14 und einen vierten Flügel 15, wobei die beiden letztgenannten Flügel 14, 15 in Betriebsstellung der Schließeinheit nach unten weisen. Zwischen drittem Flügel 14 und viertem Flügel 15 ist eine Kompensationseinrichtung 17 in Form von zwei Kompensationszylindern angeordnet. Die Kompensationseinrichtung 17 dient einer Kompensation der Verformung des Maschinenrahmens, sodass die Abstützeinrichtung nur noch die Verformung des ersten Flügels kompensieren muss. Die Kompensationseinrichtung 17 ist in bekannter Weise als hydraulisches System ausgebildet.

Abgesehen von dem im vorstehenden Absatz erläuterten Unterschied besitzt die Schließeinheit gemäß dem zweiten Ausführungsbeispiels alle Merkmale und Funktionen des ersten Ausführungsbeispiels. Daher wird auf diese nicht näher eingegangen.

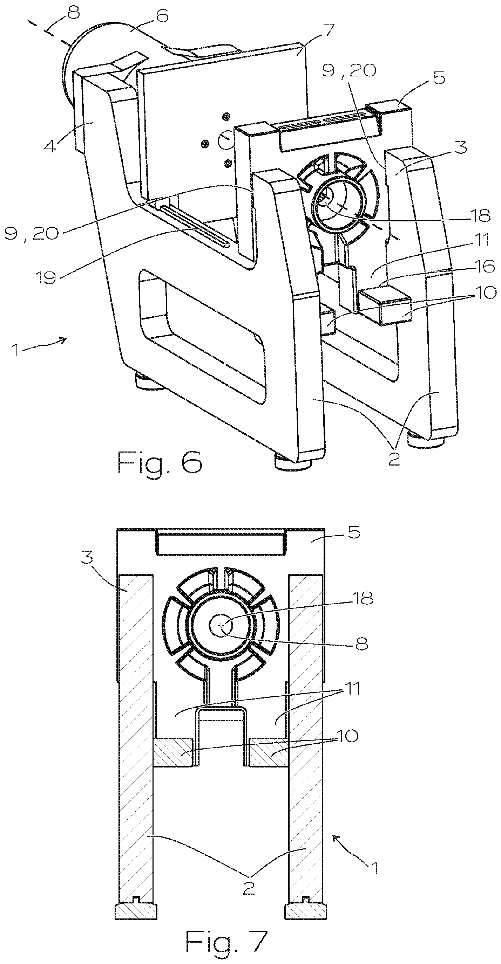

Fig. 6 zeigt eine schematische perspektivische Ansicht einer Schließeinheit gemäß einem dritten erfindungsgemäßen Ausführungsbeispiel. Im Unterschied zum ersten Ausführungsbeispiel umfasst die Abstützeinrichtung zwei separate Verbindungsbalken 10. Die beiden Verbindungsbalken 10 sind als Vorsprünge an den Rahmenteilen 2 ausgeformt und dienen der Abstützung der beiden Federbalken 11. Die Federbalken 11 sind integral mit der feststehenden Formaufspannplatte 5 in Form von Fortsätzen ausgebildet. Auch in diesem Ausführungsbeispiel sind die Federbalken 11 nebeneinander angeordnet. Die Verbindungsbalken 10 sind jedoch nicht miteinander verbunden und somit sind auch die Rahmenteile an dieser Stelle nicht miteinander verbunden.

Fig. 7 zeigt eine schematische Schnittansicht der Schließeinheit aus Fig. 6 entlang der Ebene A-A, wobei hier die getrennten Verbindungsbalken 10 im Detail erkennbar sind.

Abgesehen von den erläuterten Unterschieden besitzt die Schließeinheit gemäß dem dritten Ausführungsbeispiels alle Merkmale und Funktionen des ersten Ausführungsbeispiels. Daher wird auf diese nicht näher eingegangen.

## Patentansprüche

1. **Säulenlose Schließeinheit** für eine Spritzgießvorrichtung,
- wobei die Schließeinheit einen, gegebenenfalls zwei Rahmenteile (2) umfassenden, Maschinenrahmen (1) aufweist, wobei der Maschinenrahmen (1) einen ersten Flügel (3) und einen zweiten Flügel (4) umfasst,
- wobei eine feststehende Formaufspannplatte (5) vorgesehen ist, die am ersten Flügel (3) angeordnet ist, wobei die feststehende Formaufspannplatte (5) an einem Befestigungsbereich (9) fest mit dem ersten Flügel (3) verbunden ist,
- wobei eine Schließeinrichtung (6) vorgesehen ist, die am zweiten Flügel (4) angreift und die mit einer beweglichen Formaufspannplatte (7) verbunden ist, wobei die Schließeinrichtung (6) dazu eingerichtet ist, die bewegliche Formaufspannplatte (7) entlang einer Maschinenlängsachse (8) zu verfahren und eine Presskraft in Richtung der feststehenden Formaufspannplatte (5) auszuüben,
- wobei die feststehende Formaufspannplatte (5) unterhalb des Befestigungsbereichs (9) über eine Abstützeinrichtung elastisch gegen den Maschinenrahmen (1) abgestützt ist,
- wobei die Abstützeinrichtung einen im Wesentlichen orthogonal zur Maschinenlängsachse (8) verlaufenden Verbindungsbalken (10) umfasst,
**dadurch gekennzeichnet, dass** die Abstützeinrichtung wenigstens einen bei Aufbringen der Presskraft auf Biegung beanspruchten Federbalken (11) umfasst, wobei der Federbalken (11) zur Übertragung der Presskraft von der feststehenden Formaufspannplatte (5) auf den Verbindungsbalken (10) eingerichtet ist, und dass der Federbalken (11) im Wesentlichen orthogonal zur Maschinenlängsachse (8) sowie im Wesentlichen orthogonal zum Verbindungsbalken (10) verläuft.

2. Schließeinheit nach Anspruch 1, **dadurch gekennzeichnet, dass** ein Verbindungsbalken (10) die beiden Rahmenteile (2) miteinander verbindet, **oder** dass zwei separate Verbindungsbalken (10) vorgesehen sind, die jeweils an einem Rahmenteil (2) angeordnet sind.

3. Schließeinheit nach Anspruch 1 oder 2, **dadurch gekennzeichnet, dass** die Abstützeinrichtung mehrere, insbesondere zwei, Federbalken (11) umfasst, wobei die Federbalken (11) in Längserstreckungsrichtung eines Verbindungsbalkens (10) nebeneinander angeordnet sind.

4. Schließeinheit nach Anspruch 2 oder 3, **dadurch gekennzeichnet, dass** an jedem Verbindungsbalken (10) ein Federbalken (11) angeordnet ist, wenn zwei separate Verbindungsbalken (10) vorgesehen sind.

5. Schließeinheit nach einem der Ansprüche 1 bis 4, **dadurch gekennzeichnet,**
- **dass** der/die Federbalken (11) an einem Abstützbereich (12) mit der feststehenden Formaufspannplatte (5) verbunden ist/sind, wobei der Abstützbereich (12) in der unteren Hälfte, vorzugsweise im unteren Drittel, der feststehenden Formaufspannplatte (5) angeordnet ist, und wobei der Befestigungsbereich (9) vorzugsweise in der oberen Hälfte der feststehenden Formaufspannplatte (5) angeordnet ist,
- **oder** dass der/die Federbalken (11) integral mit der feststehenden Formaufspannplatte (5) gebildet ist/sind.

6. Schließeinheit nach Anspruch 5, **dadurch gekennzeichnet, dass** der Abstützbereich (12) bezogen auf die Maschinenlängsachse (8) über dem entsprechenden Verbindungsbalken (10) angeordnet ist.

7. Schließeinheit nach einem der Ansprüche 1 bis 6, dass die Federbalken (11) zueinander im Wesentlichen parallel verlaufen, wenn mehrere Federbalken (11) vorgesehen sind.

8. Schließeinheit nach einem der Ansprüche 1 bis 7, **dadurch gekennzeichnet, dass** eine Einstellvorrichtung vorgesehen ist, die dazu eingerichtet ist, die Neigung der feststehenden Formaufspannplatte (5) anzupassen.

9. Schließeinheit nach Anspruch 8, **dadurch gekennzeichnet, dass** die Einstellvorrichtung eine gewinkelte Anlagefläche (13) umfasst, wobei die gewinkelte Anlagefläche (13) an einer oder mehreren der folgenden Komponenten angeordnet ist:
- an der feststehenden Formaufspannplatte (5) im Verbindungsbereich zum Federbalken (11), wobei die gewinkelte Anlagefläche (13) insbesondere am Abstützbereich (12) angeordnet ist,
- am Federbalken (11) im Verbindungsbereich zur feststehenden Formaufspannplatte (5),
- am Federbalken (11) im Verbindungsbereich zum Verbindungsbalken (10),
- am Verbindungsbalken (10) im Verbindungsbereich zum Federbalken (11),
wobei die gewinkelte Anlagefläche (13) zur Längserstreckungsrichtung des Federbalkens (11) einen Neigungswinkel α von größer als 0° aufweist, wobei gegebenenfalls pro Federbalken (11) zumindest eine gewinkelte Anlagefläche (13) vorgesehen ist.

10. Schließeinheit nach Anspruch 8 oder 9, **dadurch gekennzeichnet, dass** die Einstellvorrichtung eine Einstellschraube (22) umfasst, wobei gegebenenfalls an jedem Federbalken (11) eine Einstellschraube (22) vorgesehen ist.

11. Schließeinheit nach einem der Ansprüche 1 bis 10, **dadurch gekennzeichnet, dass** der/die Federbalken (11) mit der feststehenden Formaufspannplatte (5) verschraubt ist/sind, und/oder dass der/die Federbalken (11) mit dem Verbindungsbalken (11) verschraubt ist/sind.

12. Schließeinheit nach einem der Ansprüche 1 bis 11, **dadurch gekennzeichnet, dass** der/die Federbalken (11) gegen die feststehende Formaufspannplatte (5) vorgespannt ist/sind.

13. Schließeinheit nach einem der Ansprüche 1 bis 12, **dadurch gekennzeichnet, dass** der/die Verbindungsbalken (10) in Ausnehmungen der Rahmenteile (2) eingeführt ist/sind, oder dass der/die Verbindungsbalken (10) einstückig mit wenigstens einem Rahmenteil (2) ausgeführt ist/sind.

14. Schließeinheit nach einem der Ansprüche 1 bis 13, **dadurch gekennzeichnet,**
- **dass** der Maschinenrahmen (1) eine im Wesentlichen C-förmige Rahmengeometrie aufweist,
- **oder** dass der Maschinenrahmen (1) eine im Wesentlichen H-förmige Rahmengeometrie aufweist, wobei der Maschinenrahmen (1) zusätzlich einen dritten Flügel (14) und einen vierten Flügel (15) umfasst, wobei zwischen drittem Flügel (14) und viertem Flügel (15) eine Kompensationseinrichtung (17) angeordnet ist.

15. Schließeinheit nach Anspruch 14, **dadurch gekennzeichnet, dass** die Kompensationseinrichtung (17) mit der Schließeinrichtung (6) in Wirkverbindung steht.

16. Schließeinheit nach einem der Ansprüche 1 bis 15, **dadurch gekennzeichnet, dass** die Schließeinrichtung (6) einen elektrischen, hydraulischen und/oder mechanischen Schließmechanismus umfasst.

17. **Anordnung** einer Spritzgießvorrichtung mit einer Schließeinheit nach einem der Ansprüche 1 bis 16, wobei eine Spritzdüse der Spritzgießvorrichtung an der feststehenden Formaufspannplatte (5) angeordnet ist.

## Claims

1. **Column-free closing unit** for an injection-moulding apparatus,
- wherein the closing unit has a machine frame (1), optionally comprising two frame parts (2), wherein the machine frame (1) comprises a first leaf (3) and a second leaf (4),
- wherein a fixed mould mounting plate (5) is provided, which is arranged on the first leaf (3), wherein the fixed mould mounting plate (5) is fixedly connected to the first leaf (3) at a fastening region (9),
- wherein a closing device (6) is provided, which engages on the second leaf (4) and which is connected to a movable mould mounting plate (7), wherein the closing device (6) is arranged to move the movable mould mounting plate (7) along a longitudinal axis (8) of the machine and to exert a pressing force towards the stationary mould mounting plate (5),
- wherein the fixed mould mounting plate (5) is elastically supported against the machine frame (1) below the fastening region (9) via a support device,
- wherein the support device comprises a connecting beam (10) extending substantially orthogonally to the longitudinal axis (8) of the machine,
**characterised in that** the support device comprises at least one spring beam (11) which is subjected to bending when the pressing force is applied, wherein the spring beam (11) is arranged to transmit the pressing force from the stationary mould mounting plate (5) to the connecting beam (10), and that the spring beam (11) extends substantially orthogonally to the longitudinal axis (8) of the machine and substantially orthogonally to the connecting beam (10).

2. Closing unit according to claim 1, **characterised in that** a connecting beam (10) connects the two frame parts (2) to one another, or **in that** two separate connecting beams (10) are provided, each of which is arranged on a frame part (2).

3. Closing unit according to claim 1 or 2, **characterised in that** the support device comprises several, especially two, spring beams (11), wherein the spring beams (11) are arranged next to one another in the longitudinal direction of a connecting beam (10).

4. Closing unit according to claim 2 or 3, **characterised in that** a spring beam (11) is arranged on each connecting beam (10) if two separate connecting beams (10) are provided.

5. Closing unit according to any one of claims 1 to 4, **characterised in that**
- the spring beam(s) (11) is/are connected to the stationary mould mounting plate (5) at a support region (12), wherein the support region (12) is arranged in the lower half, preferably in the lower third, of the stationary mould mounting plate (5), and wherein the fastening region (9) is preferably arranged in the upper half of the stationary mould mounting plate (5),
- **or in that** the conveyor beam(s) (11) is/are formed integrally with the fixed mould mounting plate (5).

6. Closing unit according to claim 5, **characterised in that** the support region (12) is arranged above the corresponding connecting beam (10) in relation to the longitudinal axis (8) of the machine.

7. Closing unit according to any one of claims 1 to 6, **characterised in that** the spring beams (11) run essentially in parallel to one another if several spring beams (11) are provided.

8. Closing unit according to any one of claims 1 to 7, **characterised in that** an adjusting device is provided which is configured to adjust the inclination of the fixed mould mounting plate (5).

9. Closing unit according to claim 8, **characterised in that** the adjusting device comprises an angled contact surface (13), wherein the angled contact surface (13) is arranged on one or more of the following components:
- on the fixed mould mounting plate (5) in the connection region to the spring beam (11), whereby the angled contact surface (13) is arranged especially on the support region (12),
- on the spring beam (11) in the connection region to the fixed mould mounting plate (5),
- on the spring beam (11) in the connecting region to the connecting beam (10),
- on the connecting beam (10) in the connecting region to the spring beam (11),
wherein the angled contact surface (13) has an angle of inclination α of greater than 0° to the longitudinal direction of extension of the spring beam (11), wherein at least one angled contact surface (13) is optionally provided per spring beam (11).

10. Closing unit according to claim 8 or 9, **characterised in that** the adjusting device comprises an adjusting screw (22), wherein an adjusting screw (22) is optionally provided on each spring beam (11).

11. Closing unit according to any one of claims 1 to 10, **characterised in that** the spring beam(s) (11) is/are screwed to the fixed mould mounting plate (5), and/or in that the spring beam(s) (11) is/are screwed to the connecting bar (11).

12. Closing unit according to any one of claims 1 to 11, **characterised in that** the spring beam(s) (11) is/are pretensioned against the fixed mould mounting plate (5).

13. Closing unit according to any one of claims 1 to 12, **characterised in that** the connecting beam(s) (10) is/are inserted into recesses in the frame parts (2), or **in that** the connecting beam(s) (10) is/are designed in one piece with at least one frame part (2).

14. Closing unit according to any one of claims 1 to 13, **characterised in that**
- the machine frame (1) has an essentially C-shaped frame geometry,
- **or in that** the machine frame (1) has an essentially H-shaped frame geometry, wherein the machine frame (1) additionally comprises a third leaf (14) and a fourth leaf (15), wherein a compensation device (17) is arranged between the third leaf (14) and the fourth leaf (15).

15. Closing unit according to claim 14, **characterised in that** the compensation device (17) is operatively connected to the closing device (6).

16. Closing unit according to any one of claims 1 to 15, **characterised in that** the closing device (6) comprises an electrical, hydraulic and/or mechanical closing mechanism.

17. Arrangement of an injection moulding device with a closing unit according to any one of claims 1 to 16, wherein an injection nozzle of the injection moulding device is arranged on the stationary mould mounting plate (5).

## Revendications

1. **Unité de fermeture sans colonne** pour un appareil de moulage par injection,
- l'unité de fermeture comporte un châssis de machine (1), comprenant éventuellement deux parties châssis (2), le châssis de machine (1) comportant un premier vantail (3) et un deuxième vantail (4),
- dans lequel une plaque de montage de moule fixe (5) est prévue, qui est disposée sur le premier vantail (3), dans lequel la plaque de montage de moule fixe (5) est reliée de manière fixe au premier vantail (3) dans une zone de fixation (9),
- dans lequel un dispositif de fermeture (6) est prévu, qui s'engage sur le deuxième vantail (4) et qui est relié à une plaque de montage de moule mobile (7), dans lequel le dispositif de fermeture (6) est conçu pour déplacer la plaque de montage de moule mobile (7) le long d'un axe longitudinal de machine (8) et pour exercer une force de pression dans la direction de la plaque de montage de moule fixe (5),
- dans lequel la plaque de montage de moule fixe (5) est soutenue élastiquement contre le châssis de machine (1) en dessous de la zone de fixation (9) par un dispositif d'appui,
- dans lequel le dispositif d'appui comprend une poutre de liaison (10) s'étendant essentiellement orthogonalement à l'axe longitudinal de machine (8),
**caractérisé en ce que** le dispositif d'appui comprend au moins une poutre à ressort (11) qui est soumise à une flexion lorsque la force de pression est appliquée, dans lequel la poutre à ressort (11) est arrangée pour transmettre la force de pression de la plaque de montage de moule fixe (5) à la poutre de liaison (10), et que la poutre à ressort (11) s'étend essentiellement orthogonalement à l'axe longitudinal de machine (8) et essentiellement orthogonalement à la poutre de liaison (10).

2. Unité de fermeture selon la revendication 1, **caractérisée par le fait qu'**une poutre de liaison (10) relie les deux parties châssis (2) l'une à l'autre, ou **par le fait que** deux poutres de liaison séparées (10) sont prévues, chacune étant disposée sur une partie châssis (2).

3. Unité de fermeture selon les revendications 1 ou 2, **caractérisée par le fait que** le dispositif d'appui comprend plusieurs, en particulier deux, poutres à ressort (11), dans lesquelles les poutres à ressort (11) sont disposées les unes à côté des autres dans la direction longitudinale d'une poutre de liaison (10).

4. Unité de fermeture selon les revendications 2 ou 3, **caractérisée par le fait qu'**une poutre à ressort (11) est disposée sur chaque poutre de liaison (10) si deux poutres de liaison séparées (10) sont prévues.

5. Unité de fermeture selon l'une des revendications 1 à 4, **caractérisée par le fait que**
- la (les) poutre(s) à ressort (11) est (sont) reliée(s) à la plaque de montage de moule fixe (5) dans une zone d'appui (12), la zone d'appui (12) étant située dans la moitié inférieure, de préférence dans le tiers inférieur, de la plaque de montage de moule fixe (5), et la zone de fixation (9) étant de préférence située dans la moitié supérieure de la plaque de montage de moule fixe (5),
- **ou** la (les) poutre(s) à ressort (11) est (sont) formée(s) intégralement avec la plaque de montage de moule fixe (5).

6. Unité de fermeture selon la revendication 5, **caractérisée par le fait que** la zone d'appui (12) est disposée au-dessus de la poutre de liaison correspondante (10) par rapport à l'axe longitudinal de machine (8).

7. Unité de fermeture selon l'une des revendications 1 à 6, en ce sens que les poutres à ressort (11) sont essentiellement parallèles les unes aux autres si plusieurs poutres à ressort (11) sont prévues.

8. Unité de fermeture selon l'une des revendications 1 à 7, **caractérisée par** le fait q'un dispositif de réglage permettant d'ajuster l'inclinaison de la plaque de montage de moule fixe (5).

9. Unité de fermeture selon la revendication 8, **caractérisée par le fait que** le dispositif de réglage comprend une surface de contact angulaire (13), dans laquelle la surface de contact angulaire (13) est disposée sur un ou plusieurs des composants suivants :
- sur la plaque de montage de moule fixe (5) dans la zone de raccordement à la poutre à ressort (11), la surface de contact angulaire (13) étant disposée en particulier sur la zone d'appui (12),
- sur la poutre à ressort (11) dans la zone de raccordement à la plaque de montage de moule fixe (5),
- sur la poutre à ressort (11) dans la zone de connexion à la poutre de liaison (10),
- sur la poutre de liaison (10) dans la zone de liaison à la poutre à ressort (11), dans laquelle la surface de contact angulaire (13) présente un angle d'inclinaison α supérieur à 0° par rapport à la direction longitudinale de la poutre à ressort (11), dans laquelle au moins une surface de contact angulaire (13) est éventuellement prévue par poutre à ressort (11).

10. Unité de fermeture selon les revendications 8 ou 9, **caractérisée par le fait que** le dispositif de réglage comprend une vis de réglage (22), une vis de réglage (22) étant éventuellement prévue sur chaque poutre à ressort (11).

11. Unité de fermeture selon l'une des revendications 1 à 10, **caractérisée par le fait que** la (les) poutre(s) à ressort (11) est (sont) vissée(s) à la plaque de montage de moule fixe (5), et/ou **par le fait que** la (les) poutre(s) à ressort (11) est (sont) vissée(s) à la poutre de liaison (11).

12. Unité de fermeture selon l'une des revendications 1 à 11, **caractérisée par le fait que** la (les) poutre(s) à ressort (11) est (sont) précontrainte(s) contre la plaque de montage de moule fixe (5).

13. Unité de fermeture selon l'une des revendications 1 à 12, **caractérisée par le fait que** la (les) poutre(s) de liaison (10) est (sont) insérée(s) dans des évidements des parties châssis (2), ou **par le fait que** la (les) poutre(s) de liaison (10) est (sont) conçue(s) en une seule pièce avec au moins une partie châssis (2).

14. Unité de fermeture selon l'une des revendications 1 à 13, **caractérisée par le fait que**
- le châssis de machine (1) a une géométrie de châssis essentiellement en forme de C,
- **ou par le fait que** le châssis de machine (1) a une géométrie essentiellement en forme de H, dans lequel le châssis de machine (1) comprend en outre un troisième vantail (14) et un quatrième vantail (15), dans lequel un dispositif de compensation (17) est disposé entre le troisième vantail (14) et le quatrième vantail (15).

15. Unité de fermeture selon la revendication 14, **caractérisée par le fait que** le dispositif de compensation (17) est relié de manière opérationnelle à l'unité de fermeture (6).

16. Unité de fermeture selon l'une des revendications 1 à 15, **caractérisée par le fait que** l'unité de fermeture (6) comprend un mécanisme de fermeture électrique, hydraulique et/ou mécanique.

17. Agencement d'un dispositif de moulage par injection avec une unité de fermeture selon l'une des revendications 1 à 16, dans lequel une buse d'injection du dispositif de moulage par injection est disposée sur la plaque de montage de moule fixe (5).
